# DEMANDE DE BREVET EUROPEEN

(11) **EP 2 354 753 A1**
(43) Date de publication de la demande: **10.08.2011**
(21) Numéro de dépôt: 11152557.2
(22) Date de dépôt: 28.01.2011
(51) Int. Cl.: F41G 5/08, G01S 11/12, F41H 11/02

(54) **Procédé de détermination de la trajectoire d'un missile balistique**

(30) Priorité: 29.01.2010 FR 1000371
(71) Demandeur: Thales, 92200 Neuilly Sur Seine (FR)
(72) Inventeur: Peres, Alain, 92260 Fontenay aux Roses (FR); Perrin, Frédéric, 78120 Rambouillet (FR); Sauty, Eric, 75012 Paris (FR)
(74) Mandataire: Collet, Alain

(57) **Abrégé**

L'invention se situe dans le domaine de la détection et de la trajectographie de missiles balistiques. Elle concerne un procédé de détermination de la trajectoire d'un missile balistique à l'aide de mesures d'angles de site et d'azimut.

Le procédé comprend :
- une étape (103, 104) de détermination, à différents instants où le missile balistique est en phase exoatmosphérique non propulsée, d'un angle d'azimut et d'un angle de site du missile balistique,
- une étape (105) de détermination des positions en trois dimensions du missile balistique auxdits instants à partir des différents couples d'angles et d'un modèle cinématique de trajectoire balistique non freinée.

## Description

L'invention se situe dans le domaine de la détection et de la trajectographie de missiles balistiques. Elle concerne un procédé de détermination de la trajectoire d'un missile balistique à l'aide de mesures d'angles de site et d'azimut.

La trajectographie d'un missile balistique est généralement réalisée soit directement à partir d'ensembles de mesures en trois dimensions issus d'un unique capteur, soit par triangulation à l'aide de mesures en deux dimensions issues d'au moins deux capteurs situés en deux endroits distincts.

Les mesures en trois dimensions sont par exemple repérées dans un repère sphérique centré sur le capteur. Elles comportent alors deux mesures angulaires, à savoir une mesure d'angle d'azimut et une mesure d'angle de site, et une mesure de distance entre le capteur et le missile balistique. La distance peut être mesurée à l'aide d'un radar ou d'un télémètre laser. L'utilisation d'un radar paraît la solution la plus évidente dans la mesure où les mesures d'angles d'azimut et de site peuvent également être obtenues par le radar. Cependant, un missile balistique présente une faible signature radar et peut se trouver à une distance relativement éloignée du radar, parfois à plus de mille kilomètres, la zone à surveiller pouvant être étendue. Par conséquent, le radar doit être pourvu de traitements radar spécifiques et d'une antenne de dimensions importantes pour pouvoir détecter un missile balistique. Ces contraintes engendrent bien entendu une complexité et un coût importants. Une solution alternative aux radars consiste à utiliser un télémètre laser pour mesurer la distance du missile balistique, les mesures d'angles d'azimut et de site étant par exemple obtenues par une caméra à haute résolution. Cependant, les télémètres laser ont une portée ne dépassant pas 100 à 150 kilomètres sur les missiles balistiques. Cette portée est insuffisante pour couvrir des zones étendues dont les dimensions sont de plusieurs centaines de kilomètres. Par conséquent, une difficulté liée à la détermination de la trajectoire d'un missile balistique à partir de mesures en trois dimensions est d'obtenir la mesure de distance.

La trajectographie par triangulation à partir de mesures en deux dimensions nécessite au moins deux capteurs situés en des endroits distincts dont les positions sont connues. Chaque capteur, par exemple une caméra à haute résolution, fournit à des instants donnés un couple d'angles, à savoir un angle d'azimut et un angle de site. La position d'un missile balistique à un instant donné dans un repère à trois dimensions est alors déduite des deux couples de mesures correspondants et des positions respectives des capteurs. Pour que la trajectographie par triangulation fournisse des positions fiables, les deux capteurs doivent être suffisamment distants l'un de l'autre et la trajectoire du missile balistique ne doit pas se situer au voisinage de la zone située entre les deux capteurs. Au moins trois capteurs sont donc en pratique requis pour couvrir l'ensemble d'une zone. La multiplicité des capteurs rend la trajectographie par triangulation complexe et coûteuse.

Un but de l'invention est notamment de pallier tout ou partie des inconvénients précités en permettant de déterminer la trajectoire tridimensionnelle d'un missile balistique de façon simple, efficace et économique. A cet effet, l'invention a pour objet un procédé de détermination de la trajectoire d'un missile balistique, caractérisé en ce qu'il comprend :
- une étape de détermination, à différents instants où le missile balistique est en phase exoatmosphérique non propulsée, d'un angle d'azimut et d'un angle de site du missile balistique,
- une étape de détermination des positions en trois dimensions du missile balistique auxdits instants à partir des différents couples d'angles et d'un modèle cinématique de trajectoire balistique non freinée.

L'invention a notamment pour avantage qu'elle permet de déterminer la trajectoire tridimensionnelle d'un missile balistique à partir d'un unique capteur donnant uniquement les positions angulaires du missile balistique.

Selon une forme particulière de réalisation, l'étape de détermination d'un couple d'angles du missile balistique comporte une sous-étape de détermination d'un couple de coordonnées du missile balistique représentatives d'un angle d'azimut et d'un angle de site dudit missile balistique, et une sous-étape de détermination du couple d'angles du missile balistique à partir d'une relation liant les couples de coordonnées aux couples d'angles du missile balistique.

Les couples de coordonnées du missile balistique sont par exemple acquis par une caméra à haute résolution, les coordonnées du missile balistique étant définies dans un repère lié à la caméra à haute résolution.

Selon une forme particulière de réalisation, l'étape de détermination des positions en trois dimensions du missile balistique est répétée à chaque détermination d'un nouveau couple d'angles, les positions en trois dimensions du missile balistique étant affinées par la méthode des moindres carrés non linéaires.

Selon une première variante de réalisation, le modèle cinématique de trajectoire balistique non freinée prend en compte une gravité variable en fonction de la position du missile balistique par rapport à un repère terrestre.

Selon une deuxième variante de réalisation, l'étape de détermination des positions en trois dimensions du missile balistique comporte une première sous-étape consistant à déterminer les positions en trois dimensions à l'aide d'un modèle cinématique de trajectoire balistique non freinée et à gravité constante, et une deuxième sous-étape consistant à affiner les positions en trois dimensions à l'aide d'un modèle cinématique de trajectoire balistique non freinée et à gravité variable en fonction de la position du missile balistique par rapport à un repère terrestre.

Le procédé selon l'invention peut en outre comporter une étape d'estimation du point d'impact du missile balistique à partir de ses positions en trois dimensions en phase exoatmosphérique non propulsée et d'un modèle cinématique de trajectoire balistique freinée en phase atmosphérique.

Cette étape peut comprendre une étape préalable de détermination du type du missile balistique à partir de sa trajectoire en phase exoatmosphérique non propulsée et de sa portée, le modèle cinématique de trajectoire balistique freinée utilisant un coefficient balistique fonction du type du missile balistique.

Le procédé selon l'invention peut également comporter une étape d'estimation du point de lancement du missile balistique à partir de ses positions en trois dimensions en phase exoatmosphérique non propulsée et d'un modèle cinématique de trajectoire balistique freinée en phase atmosphérique.

Cette dernière étape peut comprendre une étape préalable de détermination du type du missile balistique à partir de sa trajectoire en phase exoatmosphérique non propulsée et de sa portée, le modèle cinématique de trajectoire balistique freinée utilisant un coefficient balistique fonction du type du missile balistique.

Elle peut également tenir compte de couples d'angles du missile balistique déterminés avant la phase exoatmosphérique non propulsée.

L'invention sera mieux comprise et d'autres avantages apparaîtront à la lecture de la description qui suit faite en regard de dessins annexés qui représentent :
- la figure 1, un exemple de réalisation du procédé de détermination de la trajectoire d'un projectile balistique selon l'invention ;
- la figure 2, un exemple de réalisation d'une sous-étape du procédé de la figure 1 consistant à vérifier que le missile balistique a atteint la phase de vol exoatmosphérique non propulsée.

L'invention s'attache à déterminer la trajectoire de missiles balistiques. Par missile balistique, on entend un projectile autopropulsé décrivant une trajectoire balistique hors de l'atmosphère après la phase propulsée.

Le procédé de détermination de la trajectoire d'un missile balistique selon l'invention utilise des angles d'azimut et de site définis dans un repère sphérique. L'angle d'azimut ou gisement est la projection dans le plan horizontal de l'angle formé entre d'une part, le plan vertical passant par l'origine du repère sphérique et le nord géographique, et d'autre part la droite passant par l'origine et l'objet. Un angle de site d'un objet se définit comme un angle entre, d'une part, un plan horizontal passant par l'origine du repère sphérique et, d'autre part, la droite passant par l'objet et l'origine. L'angle de site est également appelé angle d'élévation. Les angles d'azimut et de site peuvent être mesurés directement dans le repère sphérique, par exemple à l'aide d'un radar. Cependant, dans le cadre de l'invention, la position des objets, en l'occurrence des missiles balistiques, est déterminée à partir d'un capteur passif tel qu'une caméra à haute résolution, sans connaissance de la distance de l'objet.

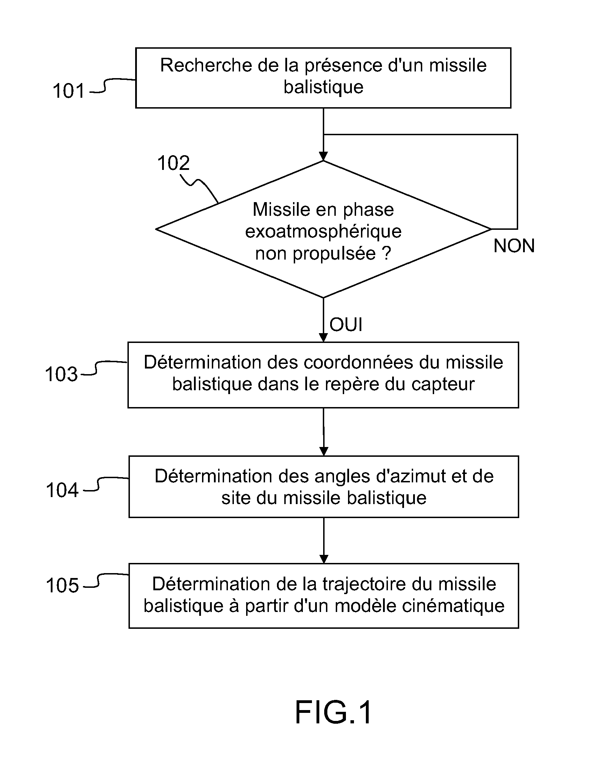

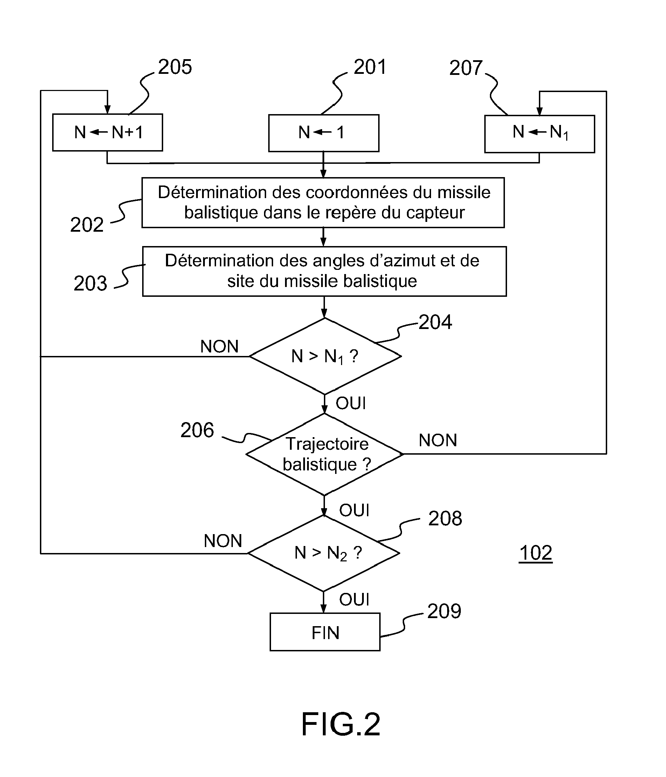

La figure 1 représente un exemple de réalisation du procédé selon l'invention. Dans une première étape 101, la présence d'un missile balistique peut être recherchée dans une zone à surveiller. Un missile balistique est par exemple recherché par le rayonnement infrarouge qu'il émet. Lorsqu'un missile balistique a été détecté, on détermine la phase de vol dans laquelle il se trouve dans une deuxième étape 102. A tout le moins, on détermine si le missile balistique a atteint la phase de vol exoatmosphérique non propulsée. Autrement dit, on détermine si le missile balistique est sorti de l'atmosphère et si sa propulsion est achevée. Cette étape 102 est par exemple réalisée en vérifiant la signature infrarouge du missile balistique. Si le niveau du rayonnement infrarouge émis par le missile balistique chute brutalement, cela signifie que la phase de propulsion est terminée. Généralement, cette phase de propulsion se termine une fois que le missile balistique est sorti de l'atmosphère. La vérification que la propulsion est achevée est donc suffisante pour déterminer que le missile balistique est en phase de vol exoatmosphérique non propulsée. L'étape 102 peut également être réalisée en cherchant à déterminer si le missile balistique suit une trajectoire balistique. Cette solution est détaillée plus loin en référence à la figure 2. Dans une troisième étape 103, on détermine, à différents instants, appelés instants de mesure *t*, des angles αₜ et βₜ du missile balistique dans un repère lié à une caméra à haute résolution. Cette étape 103 consiste par exemple à repérer le ou les pixels de l'image de la caméra comportant un missile balistique. Le capteur de la caméra est par exemple sensible aux longueurs d'onde infrarouges. Tout autre capteur passif peut être utilisé à la place d'une caméra à haute résolution, dans la mesure où il permet de fournir, à des instants donnés, des couples de coordonnées d'un objet représentatives d'un angle d'azimut et d'un angle de site de cet objet. Dans une quatrième étape 104, on détermine, pour chaque couple d'angles (αₜ, βₜ) du missile balistique dans le repère de la caméra, un angle d'azimut θₜ et un angle de site ϕₜ du missile balistique. Les angles d'azimut θₜ et de site ϕₜ sont déterminés en fonction de l'orientation du repère de la caméra par rapport au repère sphérique considéré. Dans le cas où la caméra à haute résolution est embarquée, l'orientation est par exemple déterminée par une centrale inertielle ou par un système de visée stellaire, l'angle d'azimut et l'angle de site étant déterminés par interpolation entre des étoiles dont la position est donnée par des éphémérides.

Un couple d'angles (θₜ, (ϕₜ), à savoir un angle d'azimut θₜ et un angle de site ϕₜ, est ainsi associé à chaque instant de mesure *t*. Selon une forme particulière de réalisation, les couples d'angles (θₜ, ϕₜ) peuvent être déterminés directement, sans passer par des couples d'angles (αₜ, βₜ). Les étapes 103 et 104 du procédé décrit en référence à la figure 1 sont alors remplacées par une étape unique de détermination de couples d'angles (θₜ, ϕₜ).

Les couples d'angles (θₜ, ϕₜ) constituent des mesures du mouvement angulaire du missile balistique en fonction du temps. La seule connaissance de plusieurs couples d'angles ne permet cependant pas de déduire les distances associées dₜ du missile balistique et, par suite, de déterminer les positions en trois dimensions du missile balistique. Selon l'invention, dans une cinquième étape 105, les positions en trois dimensions (dₜ, θₜ, ϕₜ) du missile aux différents instants de mesure *t* sont déterminées en associant les couples d'angles (θₜ, ϕₜ) à un modèle cinématique de trajectoire balistique non freinée. Les positions en trois dimensions du missile sont considérées dans un repère sphérique. Elles pourraient cependant tout aussi bien être considérées dans un repère cartésien. Le modèle cinématique considère une trajectoire balistique dépendant uniquement de la force de gravité. En effet, le missile balistique étant sorti de l'atmosphère et n'étant plus propulsé, il n'est plus soumis qu'à la force de gravité. Les forces de frottement peuvent généralement être négligées. La trajectoire du missile balistique en phase exoatmosphérique non propulsée dépend alors de la position initiale (dᵢ, θᵢ, ϕᵢ) et de la vitesse initiale (ḋᵢ, θ̇_{i,} *ϕ̇*ᵢ) du missile balistique à la fin de la propulsion hors atmosphère, appelées respectivement point d'injection et vitesse à l'injection. Le modèle cinématique peut prendre en compte la variabilité de la gravité, celle-ci étant dépendante de l'altitude, de la latitude et, dans une moindre mesure, de la longitude du missile balistique. En conséquence, l'étape 105 de détermination de la trajectoire du missile balistique consiste à déterminer les distances dₜ qui permettent aux positions en trois dimensions (dₜ, θₜ, ϕₜ) du missile de satisfaire à des équations de trajectoire balistique non freinée.

Selon une forme particulière de réalisation, l'étape 105 est répétée à chaque détermination d'un nouveau couple d'angles (θₜ, ϕₜ). Une méthode d'optimisation globale, telle que la méthode des moindres carrés non linéaires, peut ainsi être appliquée aux positions en trois dimensions (dₜ, θₜ, ϕₜ) du missile afin d'affiner ces positions.

Selon une forme particulière de réalisation, l'étape 105 comporte deux sous-étapes. Une première sous-étape détermine les positions en trois dimensions (dₜ, θₜ, ϕₜ) du missile permettant de satisfaire à des équations de trajectoire balistique non freinée et à gravité constante. Dans une deuxième sous-étape, les positions en trois dimensions (dₜ, θₜ, ϕₜ) du missile sont affinées en considérant des équations de trajectoire balistique non freinée et à gravité variable. Le premier modèle cinématique utilisé, à gravité constante, permet de déterminer grossièrement mais rapidement la trajectoire du missile balistique. Le deuxième modèle cinématique utilisé, à gravité variable, permet d'affiner la trajectoire à partir de la première trajectoire estimée.

Dans le cas où le capteur passif fournissant des coordonnées représentatives d'un angle d'azimut et d'un angle de site du missile balistique est situé au niveau du sol ou dans les basses couches de l'atmosphère, et poursuit un missile bas sur l'horizon, le missile balistique est observé à travers les basses couches de l'atmosphère. Or ces couches engendrent une déviation du rayonnement électromagnétique par phénomène de réfraction. Par conséquent, les angles d'azimut θₜ et de site ϕₜ déterminés lors de l'étape 104 sont différents des angles d'azimut et de site réels. Les angles d'azimut θₜ et de site ϕₜ peuvent être corrigés en leur appliquant un facteur correctif. Le facteur correctif appliqué à un angle d'azimut θₜ ou à un angle de site ϕₜ peut notamment dépendre des angles d'azimut θₜ et de site ϕₜ eux-mêmes, de la distance dₜ, des conditions saisonnières et des conditions atmosphériques, selon des lois connues. Le capteur passif peut également être embarqué dans un aéronef de surveillance. L'observation du missile balistique peut alors être effectuée sans traversée des couches nuageuses. En outre, la solution aéroportée présente l'avantage de réduire le masquage dû à la rotondité de la terre.

La figure 2 illustre un deuxième exemple de réalisation de l'étape 102 de vérification que le missile balistique a atteint la phase de vol exoatmosphérique non propulsée. Cette étape 102 peut consister à déterminer si le missile suit effectivement une trajectoire balistique. A cet effet, dans une première étape 201, un compteur peut être initialisé à la valeur N = 1. Dans des deuxième et troisième étapes 202 et 203, respectivement équivalentes aux étapes 103 et 104 du procédé décrit en référence à la figure 1, un couple d'angles (θₜ, ϕₜ) est déterminé pour la position du missile balistique à l'itération N. Dans une quatrième étape 204, on détermine si l'on dispose d'un nombre suffisant de couples d'angles (θₜ, ϕₜ), par exemple en comparant la valeur N du compteur à la valeur d'un premier seuil N₁. Si tel n'est pas le cas, on réitère les étapes 202, 203 et 204 et on incrémente la valeur N du compteur d'une unité dans une étape 205. A l'inverse, c'est-à-dire si l'on dispose de plus de N₁ couples d'angles (θₜ, ϕₜ), on détermine si les N₁ derniers couples d'angles déterminés satisfont à des équations de trajectoire balistique non freinée. Si tel n'est pas le cas, on réitère les étapes 202 à 206 et on initialise la valeur N du compteur à la valeur du premier seuil N₁ dans une étape 207. A l'inverse, c'est-à-dire si les N₁ derniers couples d'angles (θₜ, ϕₜ) satisfont à des équations de trajectoire balistique non freinée, on compare la valeur N du compteur à la valeur d'un deuxième seuil N₂ qui permet d'atteindre une précision suffisante dans la détermination de la trajectoire. Si la valeur N du compteur est inférieure ou égale à la valeur du deuxième seuil N₂, on incrémente la valeur N du compteur d'une unité dans l'étape 205 et on réitère les étapes 202 à 208. Sinon, on met fin à l'étape 102 dans une étape 209 et on poursuit le procédé décrit en référence à la figure 1 avec l'étape 103. Ce deuxième exemple de réalisation de l'étape 102 présente l'avantage, par rapport à la vérification de la signature infrarouge du missile balistique, de ne pas nécessiter l'observation du missile au moment précis où sa phase de propulsion se termine.

Selon une forme particulière de réalisation, le procédé de détermination de la trajectoire d'un missile balistique selon l'invention comprend une étape d'estimation du point d'impact. Le point d'impact peut être estimé par extrapolation de la trajectoire du missile balistique déterminée en phase exoatmosphérique non propulsée. Un missile balistique atteint en général une portée propre au type de missile auquel il appartient. Par conséquent, le procédé selon l'invention peut comporter une étape consistant à déterminer le type de missile balistique observé à partir de sa trajectoire et donc de sa portée. La connaissance du type de missile balistique observé permet notamment de déterminer son coefficient aérodynamique de traînée, appelé coefficient balistique. Ainsi, lors de l'étape de détermination du point d'impact, l'extrapolation de la trajectoire du missile balistique peut utiliser un modèle cinématique de trajectoire balistique freinée pour toutes les positions du missile balistique en phase atmosphérique. En cas d'incertitude sur le type du missile, plusieurs points d'impact peuvent être calculés.

Le procédé de détermination de la trajectoire d'un missile balistique selon l'invention peut en outre comporter une étape de détermination du point de lancement du missile balistique. Le point de lancement peut être estimé par extrapolation de la trajectoire du missile balistique déterminée en phase exoatmosphérique non propulsée. De la même manière que pour la détermination du point d'impact, le procédé selon l'invention peut comporter une étape consistant à déterminer le type de missile balistique observé à partir de sa trajectoire. La connaissance du type de missile balistique observé permet non seulement de déterminer son coefficient balistique, mais également ses capacités de propulsion. L'étape de détermination du point de lancement peut utiliser un modèle cinématique de trajectoire tenant compte des forces de traînée et des forces de propulsion. Avantageusement, la détermination du point de lancement tient également compte des couples d'angles (θₜ, ϕₜ) déterminés par le capteur passif avant le point d'injection.

## Revendications

1. Procédé de détermination de la trajectoire d'un missile balistique, **caractérisé en ce qu'**il comprend :
- une étape (103, 104) de détermination, à différents instants (*t*) où le missile balistique est en phase exoatmosphérique non propulsée, d'un angle d'azimut (θₜ) et d'un angle de site (ϕₜ) du missile balistique,
- une étape (105) de détermination des positions en trois dimensions ((dₜ, θₜ, ϕₜ)) du missile balistique auxdits instants (*t*) à partir des différents couples d'angles ((θₜ, ϕₜ)) et d'un modèle cinématique de trajectoire balistique non freinée, ladite étape (105) comportant une première sous-étape consistant à déterminer les positions en trois dimensions ((dₜ, θₜ, ϕₜ)) à l'aide d'un modèle cinématique de trajectoire balistique non freinée et à gravité constante, et une deuxième sous-étape consistant à affiner les positions en trois dimensions ((dₜ, θₜ, ϕₜ)) à l'aide d'un modèle cinématique de trajectoire balistique non freinée et à gravité variable en fonction de la position du missile balistique par rapport à un repère terrestre.

2. Procédé selon la revendication 1, dans lequel l'étape (103, 104) de détermination d'un couple d'angles ((θₜ, ϕₜ)) du missile balistique comporte une sous-étape (103) de détermination d'un couple de coordonnées ((αₜ, βₜ)) du missile balistique représentatives d'un angle d'azimut (θₜ) et d'un angle de site (ϕₜ) dudit missile balistique, et une sous-étape de détermination du couple d'angles ((θₜ, ϕₜ)) du missile balistique à partir d'une relation liant les couples de coordonnées ((αₜ, βₜ)) aux couples d'angles ((θₜ, ϕₜ)) du missile balistique.

3. Procédé selon la revendication 2, dans lequel les couples de coordonnées ((αₜ, βₜ)) du missile balistique sont acquis par une caméra à haute résolution, les coordonnées ((αₜ, βₜ)) du missile balistique étant définies dans un repère lié à la caméra à haute résolution.

4. Procédé selon l'une des revendications précédentes, dans lequel l'étape (105) de détermination des positions en trois dimensions ((dₜ, θₜ, ϕₜ))du missile balistique est répétée à chaque détermination d'un nouveau couple d'angles ((θ_{t,} ϕₜ)), les positions en trois dimensions ((dₜ, θₜ, ϕₜ)) du missile balistique étant affinées par la méthode des moindres carrés non linéaires.

5. Procédé selon l'une des revendications précédentes, comprenant, en outre, une étape d'estimation du point d'impact du missile balistique à partir de ses positions en trois dimensions ((dₜ, θₜ, ϕₜ)) en phase exoatmosphérique non propulsée et d'un modèle cinématique de trajectoire balistique freinée en phase atmosphérique.

6. Procédé selon la revendication 5, dans lequel l'étape d'estimation du point d'impact du missile balistique comprend une étape préalable de détermination du type du missile balistique à partir de sa trajectoire en phase exoatmosphérique non propulsée et de sa portée, le modèle cinématique de trajectoire balistique freinée utilisant un coefficient balistique fonction du type du missile balistique.

7. Procédé selon l'une des revendications précédentes, comprenant, en outre, une étape d'estimation du point de lancement du missile balistique à partir de ses positions en trois dimensions ((dₜ, θₜ, ϕₜ)) en phase exoatmosphérique non propulsée et d'un modèle cinématique de trajectoire balistique freinée en phase atmosphérique.

8. Procédé selon la revendication 7, dans lequel l'étape d'estimation du point de lancement du missile balistique comprend une étape préalable de détermination du type du missile balistique à partir de sa trajectoire en phase exoatmosphérique non propulsée et de sa portée, le modèle cinématique de trajectoire balistique freinée utilisant un coefficient balistique fonction du type du missile balistique.

9. Procédé selon l'une des revendications 7 ou 8, dans lequel l'étape d'estimation du point de lancement du missile balistique tient également compte de couples d'angles ((θₜ, ϕₜ)) du missile balistique déterminés avant la phase exoatmosphérique non propulsée.
